# EUROPEAN PATENT APPLICATION

(11) **EP 1 837 801 A1**
(43) Date of publication of application: **26.09.2007**
(21) Application number: 07005914.2
(22) Date of filing: 22.03.2007
(51) Int. Cl.: G06K 7/08, H04L 19/00

(54) **Mobile electronic device and IC card**

(30) Priority: 24.03.2006 JP 2006084057
(71) Applicant: KABUSHIKI KAISHA TOSHIBA, Tokyo 105-8001 (JP)
(72) Inventor: Takeda, Hajime, Tokyo 105-8001 (JP)
(74) Representative: HOFFMANN EITLE

(57) **Abstract**

An IC card (1) having communicating functions (111, 112) that involve a plurality of communication systems makes one of the communication systems effective and resets a counter (401) when a communication start request from an external device (2, 3) is received via communication by the above communication system. In this state, the IC card (1) determines whether or not the count of the counter (401) is set to be not smaller than a preset upper limit stored in a data memory (102) each time a command is received from the external device (2, 3). When the count of the counter (401) is smaller than the preset upper limit, the IC card performs a process corresponding to the received command and increments the counter (401). When the count of the counter (401) is equal to or larger than the preset upper limit, the IC card inhibits a process for the command received from the external device (2, 3) from being performed.

## Description

This invention relates to a mobile electronic device having plural types of communication functions by use of a plurality of communication systems and, for example, a composite IC card (dual interface IC card) having a contact communication interface to make communication via a terminal which is made in physical contact with an external device and a contactless communication interface to make radio communication in a contactless state with the external device.

At present, IC cards are roughly divided into contact IC cards, contactless IC cards and composite IC cards according to interfaces to be supported.

The contact IC card is an IC card which has a contact interface having a contact terminal that comes into physical contact with an external device. A contact IC card transmits and receives an electrical signal while the contact terminal used as the contact interface is in physical contact with the contact terminal of the external device. Further, a contact IC card is operated by electric power and a clock signal supplied from the external device via the contact interface.

A contactless IC card is an IC card which has a contactless interface configured by an antenna and modulation/demodulation circuit. The contactless IC card performs communication with an external device by use of radio waves transmitted/received via the contactless interface. The contactless IC card receives electromagnetic waves transmitted from the external device by the antenna and is operated by electric power and a clock signal generated from the received radio waves.

The composite IC card is an IC card having plural types of interfaces. Particularly, an IC card having a contact interface and contactless interface is called a dual interface IC card. Such a dual interface IC card is described in Jpn. Pat. Appln. KOKOKU Publication No. H4-16831 (Document 1).

Further, conventionally, various proposals to enhance the security of contact IC cards are provided. For example, a contact IC card which is formed to enhance the security by limiting the number of processible commands is disclosed in Jpn. Pat. Appln. KOKAI Publication No. H10-69435 (Document 2). However, a method described in Document 2 cannot be applied in its present state to a composite IC card. Further, setting contents related to security differ between contactless IC cards and contact IC cards in many cases. Therefore, it is difficult to set an optimum level of security for the respective interfaces of a composite IC.

An object of this invention is to provide a mobile electronic device, such as a composite IC card, which can attain adequate security even if it has communication functions that utilize a plurality of communication systems.

According to one aspect of this invention, there is provided a mobile electronic device comprising a plurality of communicating sections which perform communications by use of different communication systems, a communication switching section which makes effective communication by one of the plurality of communicating sections, a memory which stores an upper limit of the number of processes for a series of commands received by one communicating section which is made effective by the communication switching section, a counter which counts the number of processes performed by use of the commands received from an external device, a controller which permits the communication switching section to make effective only communication by the communicating section which has received a communication start request and resets a count of the counter when the communication start request from the external device is received by one of the communicating sections, a determining section which determines whether the count of the counter is set to be not smaller than the upper limit stored in the memory when a command is received by one of the communicating sections which is made effective by the communication switching section, a processor which performs a process corresponding to a command transmitted from the external device and received by the communicating section which is made effective by the communication switching section and increments the counter when the determining section determines that the count of the counter is smaller than the upper limit, and an inhibiting section which inhibits a process for a command received from the external device from being performed when the determining section determines that the count of the counter is not smaller than the upper limit.

According to another aspect of this invention, there is provided an IC card comprising an IC module including a plurality of communicating sections which perform communications by use of different communication systems, a communication switching section which makes effective communication by one of the plurality of communicating sections, a memory which stores an upper limit of the number of processes for a series of commands received by one communicating section which is made effective by the communication switching section, a counter which counts the number of processes performed by use of the commands received from an external device, a controller which permits the communication switching section to make effective only communication by the communicating section which has received a communication start request and resets the count of the counter when the communication start request from the external device is received by one of the communicating sections, a determining section which determines whether the count of the counter is set to be not smaller than the upper limit stored in the memory when a command is received by one of the communicating sections which is made effective by the communication switching section, a processor which performs a process corresponding to a command transmitted from the external device and received by the communicating section which is made effective by the communication switching section and increments the counter when the determining section determines that the count of the counter is smaller than the upper limit, and an inhibiting section which inhibits a process for a command received from the external device from being performed when the determining section determines that the count of the counter is not smaller than the upper limit; and an IC card main body which contains the IC module.

The invention can be more fully understood from the following detailed description when taken in conjunction with the accompanying drawings, in which:
FIG. 1 is a block diagram showing the configuration of a composite IC card according to an embodiment of this invention.
FIG. 2A is a diagram schematically showing a first example of the structure of information stored in a data memory.
FIG. 2B is a diagram schematically showing a second example of the structure of information stored in the data memory.
FIG. 3 is a diagram schematically showing an example of the structure of information stored in a RAM.
FIG. 4 is a flowchart for illustrating a first example of the operation.
FIG. 5 is a flowchart for illustrating a second example of the operation.
FIG. 6 is a flowchart for illustrating a third example of the operation.
FIG. 7 is a flowchart for illustrating a fourth example of the operation.
FIG. 8 is a flowchart for illustrating a fifth example of the operation.

There will now be described an embodiment of this invention with reference to the accompanying drawings.

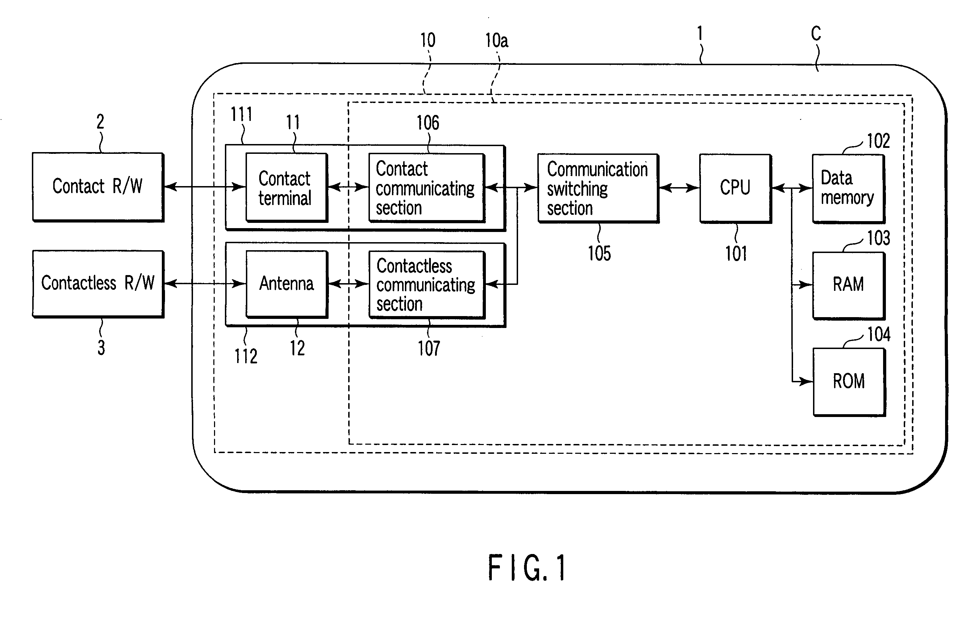

FIG. 1 is a block diagram showing the configuration of a composite IC card according to the embodiment of this invention.

In the configuration example shown in FIG. 1, an example of the configuration of a dual interface IC card having a communication function (contact communication function) that uses a contact interface and a communication function (contactless communication function) that uses a contactless interface is shown as an example of a composite IC card.

As shown in FIG. 1, the composite IC card 1 is operated to communicate with a contact reader/writer 2 having a function to communicate with a contact IC card, or a contactless reader/writer 3 having a function to communicate with a contactless IC card.

The composite IC card 1 has an IC module 10 contained in a card-like casing (main body) C. Further, the IC module 10 includes an IC chip 10a, contact terminal 11 and antenna 12. The IC chip 10a and antenna 12 are embedded in the card-like casing C. The contact terminal 11 is formed to be partly exposed to the surface of the card-like casing C. The IC module 10 may be configured to include a plurality of IC chips 10a.

The IC chip 10a includes a CPU (Central Processing Unit) 101, data memory 102, RAM (Random Access Memory) 103, ROM (Read Only Memory) 104, communication switching section 105, contact communicating section 106 and contactless communicating section 107. The contact terminal 11 and contact communicating section 106 configure a contact interface 111 to make communication (contact communication) using a communication system of a contact IC card. The antenna 12 and contactless communicating section 107 configure a contactless interface 112 to make communication (contactless communication) using a communication system of a contactless IC card.

The CPU 101 controls the whole composite IC card. The CPU 101 realizes various functions, which will be described later, by executing a control program stored in the ROM 104 or data memory 102.

The data memory 102 is configured by a rewritable nonvolatile memory such as an EEPROM or FRAM. The data memory 102 is a memory that stores various data items. The control program is also stored in the data memory 102. The RAM 103 is configured by a volatile memory or the like. The RAM 102 functions as a working memory which temporarily stores data. The ROM 104 is configured by a nonvolatile memory which is not rewritable. In the ROM 104, the control data and control program executed by the CPU 101 are stored.

The communication switching section 105 selects between communication via the contact interface 111 and communication via the contactless interface 112. That is, the composite IC card 1 is operated according to the communication system switched and selected by the communication switching section 105.

The communication switching section 105 performs the control operation to make effective communication by the selected interface under control of the CPU 101. Further, the state (setting contents) of the communication switching section 105 is acquired by the CPU 101. The communication switching section 105 supplies a signal received by the contact interface 111 and a signal received by the contactless interface 112 to the CPU 101. Thus, the CPU 101 sets effectiveness or ineffectiveness of the interfaces 111, 112 with respect to the communication switching section 105.

For example, when a communication start request is received by the contact interface 111 in the standby state, the communication switching section 105 makes communication by the contact interface 111 effective and makes communication by the contactless interface 112 ineffective. In this case, the communication switching section 105 keeps communication by the contactless communication ineffective until communication by the contact communication is ended. Further, when a communication start request is received by the contactless interface 112 in the standby state, the communication switching section 105 makes communication by the contactless interface 112 effective and makes communication by the contact interface 111 ineffective. In this case, the communication switching section 105 keeps communication by the contact communication ineffective until communication by the contactless communication is ended.

The communication switching section 105 can make effective one communication system selected from not only the communication interfaces but also various communication protocols (communication systems). For example, contactless IC cards include communication protocols (communication systems) of type A and type B, specified according to the International Standard Specification such as ISO/IEC14443. Therefore, when the composite IC card supports a plurality of communication systems via one interface, the communication switching section 105 can switch not only the communication interfaces but also communication systems. For example, in a composite IC card which supports type A and type B as the communication systems of the contactless communication, type A (or type B) can be made effective via the contactless interface and the other communication systems can be made ineffective.

The contact communicating section 106 communicates with the contact card reader/writer 2 via the contact terminal 11. That is, the contact communicating section 106 performs the communication control operation during contact communication. Further, the contact communicating section 106 is configured by a communication control circuit, for example. As described above, the contact terminal 11 and contact communicating section 106 are combined to configure the contact interface 111 which permits the composite IC card to operate as a contact IC card.

The contactless communicating section 107 communicates with the contactless reader/writer 3 via the antenna 12. That is, the contactless communicating section 107 performs the communication control operation during contactless communication. The contactless communicating section 107 is configured by a modulation/demodulation circuit which modulates or demodulates data transmitted or received as radio waves via the antenna 12, for example. As described above, the contact antenna 12 and contactless communicating section 107 are combined to configure the contactless interface 112 which permits the composite IC card to operate as a contactless IC card.

Next, information stored in the data memory 102 is explained.

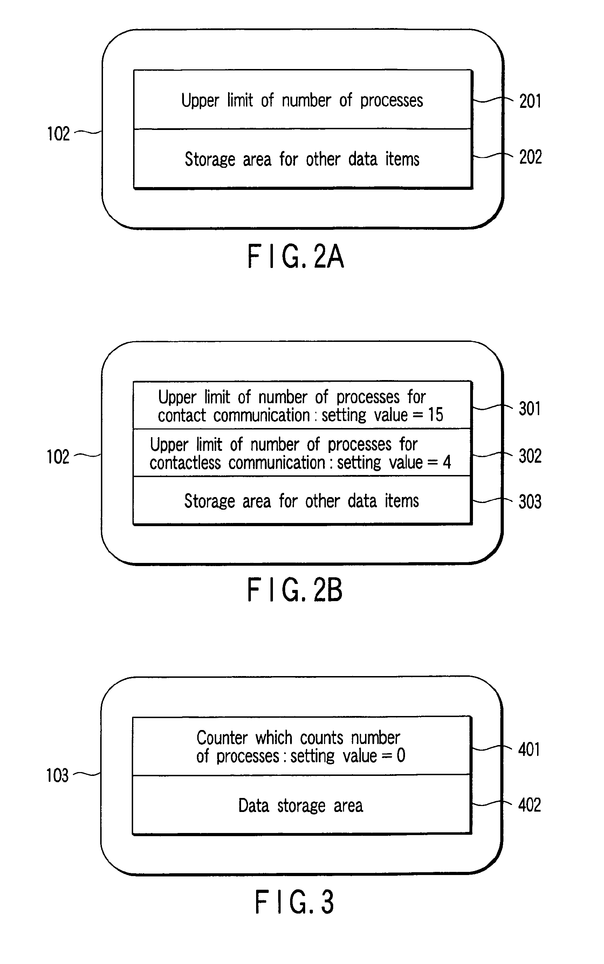

FIG. 2A is a diagram schematically showing a first example of the structure of information stored in the data memory 102. FIG. 2B is a diagram schematically showing a second example of the structure of information stored in the data memory 102.

In the example of the structure shown in FIG. 2A, memory areas 201 and 202 are provided in the data memory 102. The memory area 201 is an area in which the upper limit of the number of processes for a series of commands supplied from the external device is stored. That is, information stored in the memory area 201 indicates the upper limit of the number of processes which can be performed after the composite IC card is activated. The memory area 202 is an area in which various data items other than the upper limit of the number of processes are stored. The memory area 201 is an area specified by an address, for example. Further, the upper limit of the number of processes stored in the memory area 201 can be updated according to a specified command, for example.

In the example of the structure shown in FIG. 2B, the data memory 102 has a memory area (first memory) 301, memory area (second memory) 302 and memory area 303.

The memory area 301 is an area in which the upper limit of the number of processes for contact communication is stored. That is, the memory area 301 is an area in which the upper limit of the number of processes which can be performed during a process of communication by use of a contact interface (the upper limit of the number of processes for contact communication) is stored. In the example shown in FIG. 2B, "15" is stored in the memory area 301 as the upper limit of the number of processes for contact communication. The upper limit of the number of processes for contact communication stored in the memory area 301 is information indicating the upper limit of the number of processes for a series of commands given from the external device. For example, the memory area 301 is an area specified by an address or the like. Further, the upper limit of the number of processes for contact communication stored in the memory area 301 can be updated according to a specified command, for example.

The memory area 302 is an area in which the upper limit of the number of processes for contactless communication is stored. That is, the memory area 302 is an area in which the upper limit of the number of processes which can be performed in a process of communication by use of a contactless interface (the upper limit of the number of processes for contactless communication) is stored. In the example shown in FIG. 2B, "4" is stored in the memory area 302 as the upper limit of the number of processes for contactless communication. The upper limit of the number of processes for contactless communication stored in the memory area 302 is information indicating the upper limit of the number of processes for a series of commands given from the external device. For example, the memory area 302 is an area specified by an address or the like. Further, the upper limit of the number of processes for contactless communication stored in the memory area 302 can be updated according to a specified command, for example.

The memory area 303 is an area in which data other than the upper limit of the number of processes for contact communication and the upper limit of the number of processes for contactless communication is stored.

Next, information stored in the RAM 103 is explained.

FIG. 3 schematically shows the structure of information stored in the RAM 103.

In the RAM 103, a counter 401 and data storage area 402 are provided. The counter 401 is a counter which counts the number of processes performed according to a command received from the external device. The counter 401 is reset (or provided on the RAM 103) each time the composite IC card 1 is activated. The counter 401 is reset to an initial value (for example, "0") and incremented each time a command is received from the external device. The count of the counter 401 is incremented irrespective of a communication interface (communication system) each time a command is received from the external device.

That is, when a communication start request is received from the external device via a certain communication system, an initial value "0" is set in the counter 401. Each time a command is received from the external device during communication by the communication system (or each time the process is performed), the count of the counter 401 is updated to a value obtained by adding a preset value (for example, "1") thereto (incremented).

Next, the operation of the composite IC card with the above configuration is explained.

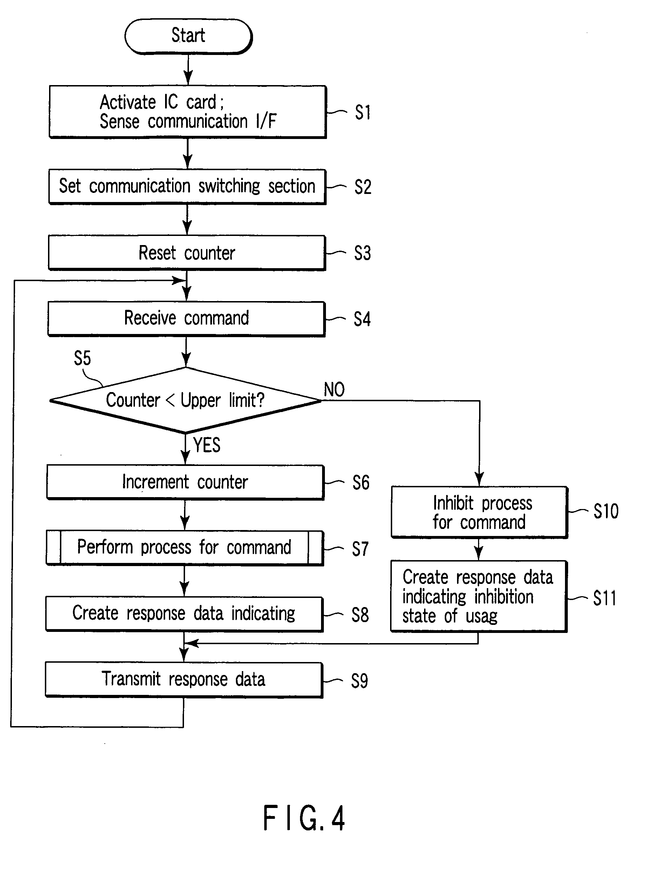

FIGS. 4 to 8 are flowcharts for illustrating first to fifth examples of the operation of the composite IC card.

First, the first operation example is explained.

FIG. 4 is a flowchart for illustrating the first example of the operation of the composite IC card 1. In the first operation example, it is supposed that the upper limit of the number of processes is stored in the data memory 102 as shown in FIG. 2A.

First, when electric power is supplied together with a communication start request from the external device (contact reader/writer 2 or contactless reader/writer 3) in the standby state, the respective sections of the composite IC card are activated. At this time, the CPU 101 detects whether an interface which has received the communication start request from the external device is a contact interface or contactless interface (step S1). When the communication switching section 105 sets not only the interface for communication but also the communication system (communication protocol), the CPU 101 determines the communication system based on the communication start request from the external device.

For example, when a communication start request is received via the contact terminal 11, the CPU 101 determines that the communication start request is received from the contact interface 2 acting as the external device via the contact interface 111. Further, when receiving the communication start request via the antenna 12, the CPU 101 determines that the communication start request is received from the contactless interface 3 acting as the external device via the contactless interface 112.

Upon detecting the interface that has received the communication start request, the CPU 101 sets the communication switching section 105 to make effective communication via the interface which has received the communication start request, and make communication by the other interfaces ineffective (step S2). The CPU 101 thus sets the communication switching section 105 and, at the same time, resets the counter 401 provided on the RAM 103 (or sets the counter 401 on the RAM 103) (step S3). In this case, it is supposed that the count of the reset counter is "0", for example.

If, in this state, a command (instruction) is received from the exterior (card reader/writer 2 or 3) (step S4), the CPU 101 first determines whether or not the count of the counter 401 is not smaller than the upper limit of the number of processes stored in the memory area 201 of the data memory 102 (step S5).

If it is determined in the above determination step that the count of the counter 401 is smaller than the upper limit of the number of processes ("YES" in the step S5), the CPU 101 increments the counter 401 (step S6). After incrementing the counter 401, the CPU 101 performs the process for the received command (step S7). The process for the received command is realized by causing the CPU 101 to execute the control program corresponding to the command and stored in the ROM 104 or the like. That is, the CPU 101 functions as a processor which performs the process for the command.

When the process for the received command is performed, the CPU 101 creates response data indicating the result of the process (step S8). The response data contains data indicating that the process relating to the command was correctly terminated or erroneously terminated, for example. After creating the response data, the CPU 101 transmits the response data to the external device (card reader/writer 2 or 3) acting as a receiving source of the command via the interface set by the communication switching section 105 (step S9).

The process of the steps S4 to S9 is a process for commands sequentially received from the external device. Therefore, when the process of the step S9 is completed, the CPU 101 returns the process to the step S4 and sets a reception waiting state for the next command from the external device. When the process for a series of commands received from the external device is terminated, the CPU 101 terminates the communication process (a series of processes) with the external device.

If it is determined in the step S5 that the count of the counter 401 is equal to or larger than the upper limit of the number of processes ("NO" in the step S5), the CPU 101 inhibits the process for the received command from being performed (step S10). In this case, the CPU 101 creates response data indicating the inhibition state of usage (or that the number of processes is exceeded) without performing the process for the received command (step S11). After creating the response data indicating the inhibition state of usage, the CPU 101 transmits the response data to the external device acting as the transmission source of the command (step S9) and returns the process to the step S4. Therefore, the CPU 101 of the composite IC card in which the count of the counter 401 becomes equal to or larger than the upper limit transmits (responds) the response data indicating the usage inhibition state to the external device without performing the process for the command received from the external device.

In the above first operation example, when the count of the counter 401 is set equal to or larger than the upper limit, the CPU 101 does not perform the process for the received command. In other words, in a case where the count of the counter 401 becomes equal to or larger than the upper limit, the process for the command from the external device is inhibited from being performed in the composite IC card until the counter 401 is reset. As a result, even in the composite IC card, an incorrect number of processes can be inhibited form being performed and the security setting can be made based on the number of processes.

Next, the second operation example is explained.

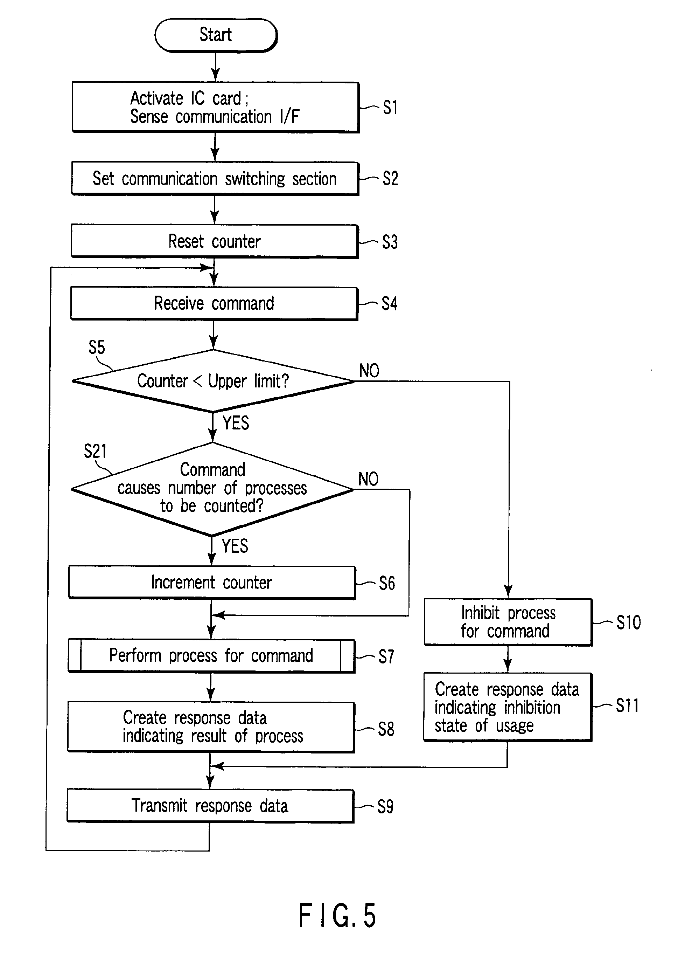

FIG. 5 is a flowchart for illustrating the second example of the operation of the composite IC card 1. In the second operation example, it is supposed that the upper limit of the number of processes is stored in the data memory 102 as shown in FIG. 2A. Further, in the second operation example shown in FIG. 5, the process of the steps S1 to S11 is the same as that of the first operation example shown in FIG. 4. Therefore, a detailed explanation of the operation of the steps S1 to S11 as the second operation example is omitted.

As shown in FIG. 5, in the second operation example, when receiving a communication start request from the external device, the CPU 101 performs the process of the steps S1 to S5, as in the case of the first operation example shown in FIG. 4.

When it is detected in the step S5 that the count of the counter 401 is smaller than the upper limit of the number of processes stored in the memory area 201 of the data memory 102 (that is, when it is determined that a process for a received command is performed) ("YES" in the step S5), the CPU 101 determines whether or not the received command is a command which causes the number of processes to be counted (step S21).

Information indicating commands to be counted is stored in the data memory 102, for example. In this case, the CPU 201 determines whether or not the received command is a command which is stored in the data memory 102 and is to be counted. Further, information indicating commands to be counted can be stored in the RAM 104.

When it is determined in the above determination step that the received command is a command which causes the number of processes to be counted ("YES" in the step S21), the CPU 101 increments the counter 401 (step S6).

When it is determined that the received command is not a command which causes the number of processes to be counted ("NO" in the step S21), the CPU 101 jumps the step S6 and advances the process to the step S7. That is, when the received command is not a command which causes the number of processes to be counted, the CPU 101 maintains the count of the counter 401 as it is (without incrementing the count) and performs the process for the received command (step S7).

After executing the command in the step S7, the CPU 101 performs the process of the steps S8 and S9, as in the first operation example shown in FIG. 4. Further, when it is determined in the step S5 that the count of the counter 401 is not smaller than the upper limit, the CPU 101 performs the process of the steps S10, S11 and S9, as in the first operation example shown in FIG. 4.

As described above, in the second operation example, only the number of processes for a specified command is counted in addition to the process explained in the first operation example. Thus, according to the second operation example, the number of processes for a specified command can be limited and efficient security can be realized.

Next, a third operation example is explained.

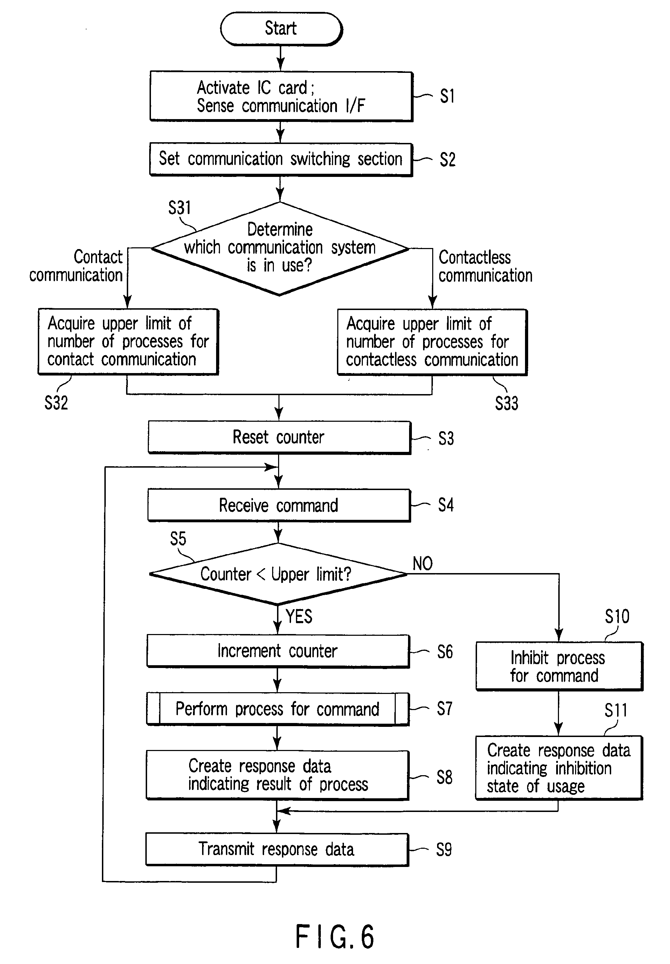

FIG. 6 is a flowchart for illustrating the third example of the operation of the composite IC card 1. In the third operation example, it is supposed that the upper limits of the number of processes are stored in the data memory 102 for the respective interfaces 111, 112 as shown in FIG. 2B. Further, in the third operation example shown in FIG. 6, the process of the steps S1 to S11 is the same as that of the first operation example shown in FIG. 4. Therefore, a detailed explanation of the process of the steps S1 to S11 in the third operation example is omitted.

As shown in FIG. 6, in the third operation example, when receiving a communication start request from the external device, the CPU 101 performs the process of the steps S1 and S2, as in the first operation example shown in FIG. 4. When a communicable interface (or communication system) is set by the process of the step S2, the CPU 101 determines an interface (or communication system) which is made effective by recognizing the setting contents of the communication switching section 105 (step S31).

If it is determined in the above determination step that communication by the contact interface 111 is made effective, the CPU 101 acquires the upper limit of the number of processes for contact communication from the memory area 301 in the data memory 102 (step S32). In this case, the value stored in the memory area 301 is used as the upper limit of the number of processes in the succeeding process (steps S3 to S11).

If it is determined that communication by the contactless interface 112 is made effective, the CPU 101 acquires the upper limit of the number of processes for contactless communication from the memory area 302 in the data memory 102 (step S33). In this case, the value stored in the memory area 302 is used as the upper limit of the number of processes in the succeeding process (steps S3 to S11).

When the upper limit of the number of processes corresponding to the interface for communication which is made effective in the step S32 or S33 is acquired, the CPU 101 performs the process of the steps S3 to S9, as in the case of the first operation example shown in FIG. 4. In this case, the CPU 101 determines in the step S5 whether the count of the counter 401 is not smaller than the upper limit of the number of processes acquired in the step S32 or S33.

As described above, in the third operation example, in addition to the first operation example, whether the received command is executed or not is determined according to whether or not the count of the counter becomes equal to or larger than the upper limit of the number of processes for the communication interface (or communication system), which is effective.

Thus, according to the third operation example, the number of processes for each communication interface (or communication system) can be limited. As a result, security corresponding to the characteristic of each communication interface can be realized.

In the third operation example, only the number of processes for a specified command may be counted by combining the third operation example with the second operation example. Thus, efficient security corresponding to the characteristic of each communication interface can be realized.

Next, a fourth operation example is explained.

The fourth operation example is an operation example containing the process of updating the upper limit of the number of processes. In the fourth operation example, the process of updating the upper limit of the number of processes is performed in response only to an updating instruction received by communication by use of the interface (communication system) corresponding to the upper limit of the number of processes. In this case, in the fourth operation example, a case wherein the process of updating the upper limit of the number of processes is performed in combination with the third operation example is explained. The updating process of the upper limit of the number of processes explained in the fourth operation example can be performed in combination with the first, second and third operation examples.

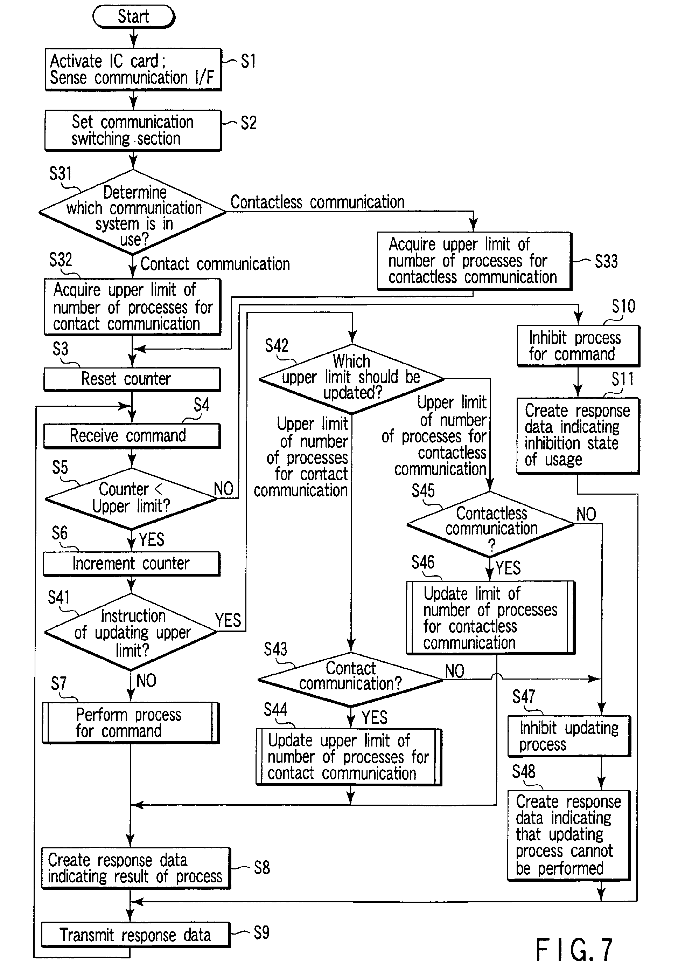

FIG. 7 is a flowchart for illustrating the fourth operation example of the composite IC card 1. In the fourth operation example, it is supposed that the upper limits of the number of processes are stored in the data memory 102 for the respective interfaces 111, 112 as shown in FIG. 2B. Further, in the fourth operation example shown in FIG. 7, the process of the steps S1 to S11 is the same as that of the first operation example shown in FIG. 4 and the process of the steps S31 to S33 is the same as that of the third operation example shown in FIG. 6. Therefore, a detailed explanation of the processes of the steps S1 to S11 and the steps S31 to S33 in the fourth operation example is omitted.

As shown in FIG. 7, in the fourth operation example, when receiving a communication start request from the external device, the CPU 101 performs the process of the steps S1 and S2, S31 to S33, S4 to S6, as in the third operation example shown in FIG. 6.

When incrementing the count of the counter in the step S6, the CPU 101 determines whether or not the received command is an instruction of updating the upper limit of the number of processes stored in the data memory 102 (step S41). If it is determined in the above determination step that the received command is not an instruction of updating the upper limit of the number of processes ("NO" in the step S41), the CPU 101 performs the process of the steps S7 to S11, as in the first operation example.

If it is determined in the above determination step that the received command is an instruction of updating the upper limit of the number of processes ("YES" in the step S41), the CPU 101 determines whether the upper limit of the number of processes to be updated is an upper limit of the number of processes for contact communication stored in the memory area 301 of the data memory 102 or an upper limit of the number of processes for contactless communication stored in the memory area 302 (step S42).

If it is determined in the above determination step that the upper limit to be updated is the upper limit of the number of processes for contact communication (step S42, the upper limit of the number of processes for contact communication), the CPU 101 determines whether or not the communication interface (or communication system) which is now made effective is the contact interface 111 (step S43). If it is determined in the above determination step that the communication interface which is now made effective is the contact interface 111 ("YES" in the step S43), the CPU 101 rewrites the upper limit of the number of processes for contact communication stored in the memory area 301 of the data memory 102 to a value specified by the received command (step S44). In this case, the CPU 101 advances the process to the step S8, creates response data indicating the result of the process (step S8) and transmits the response data to the external device (step S9).

If it is determined in the step S42 that the upper limit to be updated is the upper limit of the number of processes for contactless communication (step S42, the upper limit of the number of processes for-contactless communication), the CPU 101 determines whether or not the communication interface (or communication system) which is now made effective is the contactless interface 112 (step S45). If it is determined in the above determination step that the communication interface which is now made effective is the contactless interface 112 ("YES" in the step S45), the CPU 101 rewrites the upper limit of the number of processes for contactless communication stored in the memory area 302 of the data memory 102 to a value specified by the received command (step S46). In this case, the CPU 101 advances the process to the step S8, creates response data indicating the result of the process (step S8) and transmits the response data to the external device (step S9).

If it is determined in the step S43 that the communication interface which is now made effective is not the contact interface 111 ("NO" in the step S43) or if it is determined in the step S45 that the communication interface which is now made effective is not the contactless interface 112 ("NO" in the step S45), then the CPU 101 inhibits the updating process of the upper limit of the number of processes requested by the received command (step S47). In this case, the CPU 101 creates response data indicating that the process of updating the upper limit of the number of processes requested by the received command cannot be performed (step S48) and transmits the thus created response data to the external device (step S9).

As described above, in the fourth operation example, when a command which requests the process of updating the upper limit of the number of processes is received, the updating process is performed only in communication by use of an interface (or communication system) corresponding to the upper limit which is requested to be updated. For example, while communication by the contact interface 111 is being made, the CPU 101 receives a request of updating the upper limit of the number of processes for contact communication, but does not receive a request for updating the upper limit of the number of processes for contactless communication. On the other hand, while communication by the contactless interface 112 is being made, the CPU 101 receives a request for updating the upper limit of the number of processes for contactless communication, but does not receive a request of updating the upper limit of the number of processes for contact communication.

Thus, according to the fourth operation example, at the time of communication by use of a certain interface (communication system), the operation can be performed so as not to update the upper limit of the number of processes (setting data associated with the security) corresponding to the other interface (communication system).

The fourth operation example can be applied not only to the process of updating the upper limit of the number of processes but also to the process associated with updating of other data. For example, the fourth operation example can be applied to a process which inhibits the setting value associated with communication by use of the other interface (communication system) from being updated at the time of communication by use of a certain interface (communication system). Thus, according to the fourth operation example, it is possible to inhibit the setting value associated with communication by use of the other interface (communication system) from being updated at the time of communication by use of a certain interface (communication system).

Next, a fifth operation example is explained.

The fifth operation example is an operation example containing the process of updating the upper limit of the number of processes. Differing from the fourth operation example, in the fifth operation example, the process for updating the upper limit of the number of processes is performed only for an updating instruction received by communication by use of an interface (communication system) other than an interface (communication system) corresponding to the upper limit of the number of processes. In this case, as the fifth operation example, a case wherein the process for updating the upper limit of the number of processes is performed in combination with the third operation example is explained as the fifth operation example. The process for updating the upper limit of the number of processes explained in the fifth operation example can be performed in combination with the first, second and third operation examples.

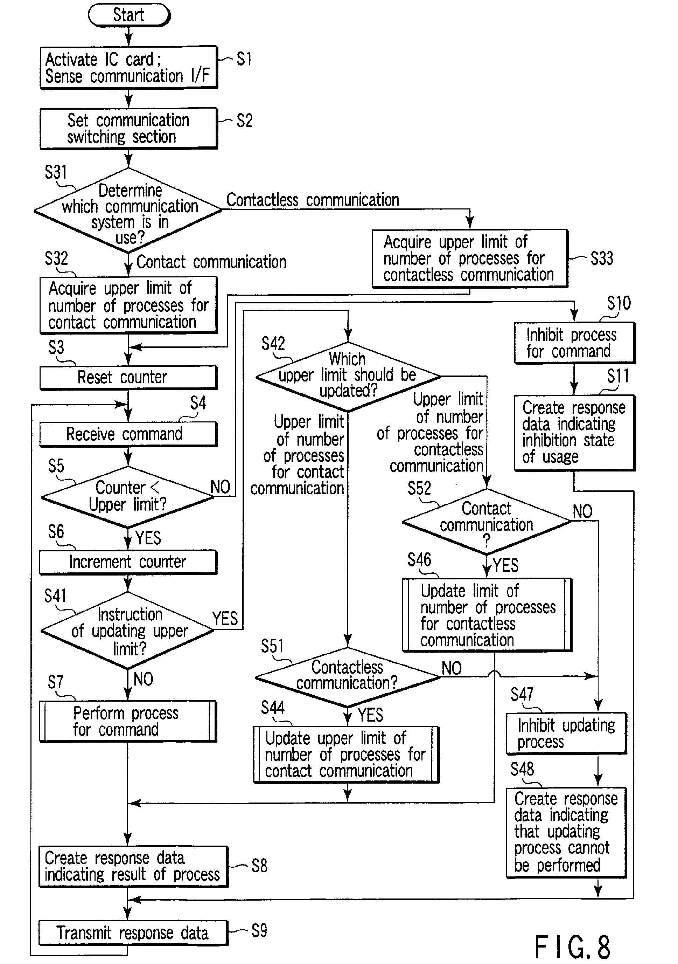

FIG. 8 is a flowchart for illustrating the fifth operation example of the composite IC card 1. In the fifth operation example, it is supposed that the upper limits of the numbers of processes are stored in the data memory 102 for the respective interfaces 111, 112 as shown in FIG. 2B. Further, in the fifth operation example shown in FIG. 8, the process of the steps S1 to S11 is the same as that of the first operation example shown in FIG. 4, the process of the steps S31 to S33 is the same as that of the third operation example shown in FIG. 6 and the process of the steps S41, S42, S44, S46, S47 is the same as that of the fourth operation example shown in FIG. 7. Therefore, a detailed explanation of the processes of the steps S1 to S11, steps S31 to S33 and steps S41, S42, S44, S46, S47 in the fifth operation example is omitted.

As shown in FIG. 8, in the fifth operation example, when receiving a communication start request from the external device, the CPU 101 performs the process of the steps S1, S2, S31 to S33, S4 to S6, S41, S42, as in the fourth operation example shown in FIG. 7.

When it is determined in the step S42 that the upper limit to be updated is the upper limit of the number of processes for contact communication (step S42, the upper limit of the number of processes for contact communication), the CPU 101 determines whether or not the communication interface (or communication system) which is now made effective is an interface (in this example, a contactless interface) other than the contact interface 111 (step S51).

If it is determined in the above determination step that the communication interface which is now made effective is the contactless interface 112 ("YES" in the step S51), the CPU 101 rewrites the upper limit of the number of processes for contact communication stored in the memory area 301 of the data memory 102 to a value specified by the received command (step S44). In this case, the CPU 101 creates response data indicating the result of the process (step S8) and transmits the response data to the external device (step S9).

If it is determined in the step S42 that the upper limit to be updated is the upper limit of the number of processes for contactless communication (step S42, the upper limit of the number of processes for contactless communication), the CPU 101 determines whether or not the communication interface (or communication system) which is now made effective is an interface (in this example, the contact interface 111) other than the contactless interface 112 (step S52). If it is determined in the above determination step that the communication interface which is now made effective is the contact interface 111 ("YES" in the step S52), the CPU 101 rewrites the upper limit of the number of processes for contactless communication stored in the memory area 302 of the data memory 102 to a value specified by the received command (step S46). In this case, the CPU 101 creates response data indicating the result of the process of the step S46 (step S8) and transmits the response data to the external device (step S9).

If it is determined in the step S51 that the communication interface which is now made effective is not the contactless interface 112 ("NO" in the step S51) or if it is determined in the step S52 that the communication interface which is now made effective is not the contact interface 111 ("NO" in the step S52), then the CPU 101 inhibits the upper limit of the number of processes requested by the received command from being updated (step S47). In this case, the CPU 101 creates response data indicating that the process of updating the upper limit of the number of processes requested by the received command cannot be performed (step S48) and transmits the thus created response data to the external device (step S9).

As described above, in the fifth operation example, when a command which requests the process of updating the upper limit of the number of processes is received, the updating process is performed only in communication by use of an interface (or communication system) other than an interface (or communication system) corresponding to the upper limit which is requested to be updated. For example, while communication by the contact interface 111 is being made, the CPU 101 receives a request for updating the upper limit of the number of processes for contactless communication, but does not receive a request for updating the upper limit of the number of processes for contact communication. On the other hand, while communication by the contactless interface 112 is being made, the CPU 101 receives a request for updating the upper limit of the number of processes for contact communication, but does not receive a request for updating the upper limit of the number of processes for contactless communication. Thus, according to the fifth operation example, at the time of communication by use of a certain interface (communication system), the operation can be performed so as not to update the upper limit of the number of processes (setting data associated with the security) corresponding to the above interface (communication system).

The fifth operation example can be applied not only to the process of updating the upper limit of the number of processes but also to the process associated with updating of other data. For example, at the time of communication by use of a certain interface (communication system), the fifth operation example can be applied to a process of inhibiting the setting value associated with communication by use of the interface (communication system) from being updated. Thus, according to the fifth operation example, it is possible to inhibit the setting value associated with communication by use of a certain interface (communication system) from being updated at the time of communication by use of the above interface (communication system).

As described above, in the above embodiment, the maximum number of instructions (the upper limit) which can be executed can be set for each of a plurality of communication systems supported. Thus, it is possible to inhibit execution of instructions of the number of times exceeding the maximum instruction number for each communication system. As a result, in an IC card which supports a plurality of communication systems, security which is equivalent to that of the IC cards used to date can be maintained in a process by use of a certain communication system (for example, a contact communication system) and the security corresponding to a different communication system (for example, a contactless communication system) can be set in a process by use of the different communication system. Thus, security conditions optimum for the respective communication systems can be set against unfair attacks from the exterior or unintentional erroneous processes.

In the present embodiment, various modifications and changes can be made. For example, the present embodiment can be applied to an IC card which supports a plurality of contactless communication systems of different specifications such as type A or type B, as specified by the International Standard Specification of ISO/IEC14443, for example. Further, the present embodiment is not limited to the contact interface or contactless interface and can be applied to an IC card having a communication function by use of a different interface. In addition, the present embodiment is not limited to a composite IC card. For example, the present embodiment can also be applied to a mobile electronic device such as a mobile telephone or a mobile information terminal device which is called PDA having a communication function by use of a plurality of communication systems.

## Claims

1. A mobile electronic device **characterized by** comprising:
a plurality of communicating sections (111, 112) which perform communications by use of different communication systems,
a communication switching section (105) which makes effective communication by one of the plurality of communicating sections,
a memory (102) which stores an upper limit of the number of processes for a series of commands received by the communicating section which is made effective by the communication switching section,
a counter (401) which counts the number of processes performed by use of the commands received from an external device,
a controller (101, S1 to S3) which makes effective only communication by the communicating section which has received a communication start request by the communication switching section and resets a count of the counter when the communication start request from the external device is received by one of the communicating sections,
a determining section (101, S4 to S5) which determines whether the count of the counter is set to be not smaller than the upper limit stored in the memory when a command is received by one of the communicating sections which is made effective by the communication switching section,
a processor (101, S6 to S7) which performs a process corresponding to a command transmitted from the external device and received by the communicating section which is made effective by the communication switching section and increments the counter when the determining section determines that the count of the counter is smaller than the upper limit, and
an inhibiting section (101, S10) which inhibits a process for a command received from the external device when the determining section determines that the count of the counter is not smaller than the upper limit.

2. The mobile electronic device according to claim 1, **characterized by** further comprising a response section (101, S11, S9) which transmits information to the effect that a process for a command received from the external device is inhibited to the external device as a response for the received command when the process for the command received from the external device is inhibited by the inhibiting section.

3. The mobile electronic device according to claim 1, **characterized in that** the processor (101, S21, S6) increments the counter each time a specified command among the commands received from the external device is received.

4. The mobile electronic device according to claim 1, **characterized in that** the memory (301, 302) stores an upper limit of the number of processes for each communicating section, and the determining section (101, S31 to S33, S5) determines whether the count of the counter is not smaller than the upper limit of the number of processes for the communicating section which is made effective by the communication switching section (105) among the plurality of upper limits of the numbers of processes stored in the memory (102).

5. The mobile electronic device according to claim 1, **characterized by** further comprising an updating section (101, S41 to S46, S51 to S52) which updates the upper limit of the number of processes stored in the memory in response to a command which requests updating of the upper limit of the number of processes stored in the memory.

6. The mobile electronic device according to claim 4, **characterized by** further comprising an updating section (101, S41 to S46) which updates the upper limit of the number of processes stored in the memory and corresponding to one of the communicating sections which is made effective by the communication switching section only when a command which requests updating of the upper limit of the number of processes corresponding to the above communicating section is received by the above communicating section.

7. The mobile electronic device according to claim 4, **characterized by** further comprising an updating section (101, S41 to S42, S51, S44, S52, S46) which updates the upper limit of the number of processes stored in the memory and corresponding to a communicating section different from one of the communicating sections which is made effective by the communication switching section only when a command which requests updating of the upper limit of the number of processes corresponding to the communicating section different from the communicating section which is made effective is received by the communicating section which is made effective.

8. The mobile electronic device according to claim 1, **characterized in that** the plurality of communicating sections include a communicating section (111) of a contact communication system which makes communication with the external device in a contact state and a communicating section (112) of a contactless communication system which makes communication with the external device by use of radio communications.

9. An IC card **characterized by** comprising:
an IC module (10) including a plurality of communicating sections (111, 112) which perform communications by use of different communication systems, a communication switching section (105) which makes effective communication by one of the plurality of communicating sections, a memory (102) which stores an upper limit of the number of processes for a series of commands received by the communicating section which is made effective by the communication switching section, a counter (401) which counts the number of processes performed in response to commands received from an external device (2, 3), a controller (101, S1 to S3) which makes effective only communication by the communicating section which has received a communication start request by the communication switching section and resets a count of the counter when the communication start request from the external device is received by one of the communicating sections, a determining section (101, S4 to S5) which determines whether the count of the counter is set to be not smaller than the upper limit stored in the memory when a command is received by one of the communicating sections which is made effective by the communication switching section, a processor (101, S6 to S7) which performs a process corresponding to a command transmitted from the external device and received by the communicating section which is made effective by the communication switching section and increments the counter when the determining section determines that the count of the counter is smaller than the upper limit, and an inhibiting section (101, S10) which inhibits a process for a command received from the external device when the determining section determines that the count of the counter is not smaller than the upper limit; and
an IC card main body (C) which contains the IC module.

10. The IC card according to claim 9, **characterized in that** the IC module (10) further includes a response section (101, S11, S9) which transmits information to the effect that a process for a command received from the external device is inhibited by the inhibiting section to the external device as a response for the received command when the process for the command received from the external device is inhibited by the inhibiting section.

11. The IC card according to claim 9, **characterized in that** the processor (101, S21, S6) increments the counter each time a specified command among the commands received from the external device is received.

12. The IC card according to claim 9, **characterized in that** the memory (301, 302) stores upper limits of the numbers of processes for respective communicating sections, and the determining section (101, S31 to S33, S5) determines whether the count of the counter is not smaller than the upper limit of the number of processes corresponding to the communicating section which is made effective by the communication switching section among the plurality of upper limits of the numbers of processes stored in the memory.
